# EUROPEAN PATENT APPLICATION

(11) **EP 4 474 441 A1**
(43) Date of publication of application: **11.12.2024**
(21) Application number: 23848240.0
(22) Date of filing: 13.06.2023
(51) Int. Cl.: C09J 133/08, C09J 133/12

(54) **BINDER FOR SECONDARY BATTERY, SEPARATOR, SECONDARY BATTERY, AND ELECTRICAL APPARATUS**

(30) Priority: 24.04.2023 CN 202310447240
(71) Applicant: Contemporary Amperex Technology (Hong Kong) Limited, Central, Central And Western District (HK)
(72) Inventor: LI, Lei, Ningde Fujian 352100 (CN); CHEN, Meihuang, Ningde Fujian 352100 (CN); ZHENG, Yi, Ningde Fujian 352100 (CN); KANG, Haiyang, Ningde Fujian 352100 (CN); LAI, Runhao, Ningde Fujian 352100 (CN); SUN, Chengdong, Ningde Fujian 352100 (CN)
(74) Representative: Kraus & Lederer PartGmbB
(86) International application number: PCT/CN2023/099995
(87) International publication number: WO 2024/221565

(57) **Abstract**

The present application relates to the technical field of secondary batteries, and more particularly relates to a binder for secondary batteries, a separator, a secondary battery and an electrical apparatus. The binder for secondary batteries is in a ring shape, and includes an acrylate copolymer. The acrylate copolymer has good adhesion, and a contact point of the binder with the ring-shaped structure is a circle line of the ring-shaped binder. The ring-shaped binder has bonding points with larger areas than a spherical binder, such that good bonding performance can be achieved when the usage amount of the binder with the ring-shaped structure is reduced.

## Description

### RELATED APPLICATION

The present application claims the priority to the Chinese patent applicationNo.202310447240.5 filed on April 24, 2023, the entire contents of which are incorporated herein by reference in its entirety.

### TECHNICAL FIELD

The present application relates to the technical field of secondary batteries, and more particularly relates to a binder for secondary batteries, a separator, a secondary battery and an electrical apparatus.

### BACKGROUND ART

With the rapid growth of portable electronic devices, electric vehicles, etc., the demand for power batteries is also increasing. However, the electrochemical performance of the batteries has attracted more and more attention of people.

At present, a battery cell has the problem of opening, that is, a gap is likely to be formed between an electrode plate and a separator, resulting in poor cycling performance of the battery.

### SUMMARY OF THE INVENTION

The main objective of the present application is to provide a binder for secondary batteries, aiming to improve the adhesion between electrode plates and a separator through the binder, thereby improving battery performance.

In order to realize the above objective, the present application provides a binder for secondary batteries, comprising an acrylate copolymer, and the binder is in a ring shape.

The acrylate copolymer has good adhesion, and the use of the acrylate copolymer makes the bonding performance between the separator and the electrode plates better.

The binder with the ring-shaped structure has a bonding point with a larger area. For example, when the binder with the ring-shaped structure makes contact with the electrode plates, the contact point is a circle line of the ring-shaped binder. While a contact point of a spherical binder is in point contact. When comparing the binder with the ring-shaped structure to the binder with the spherical binder the same in size, the bonding performance of the binder with the ring-shaped structure is better. In addition, the binder with the ring-shaped structure has a hollow through hole, so that when comparing the binder with the ring-shaped structure to the spherical binder the same in size, the mass of the binder with the ring-shaped structure is smaller. Therefore, good bonding performance can be realized when the usage amount of the binder with the ring-shaped structure is reduced.

Optionally, the specific surface area of the binder ranges from 0.4 m²/g to 1.2 m²/g, and preferably, the specific surface area of the binder ranges from 0.6 m²/g to 0.9 m²/g.

The specific surface area refers to the total area of the material per unit mass. The binder with the ring-shaped structure, based on the hollow through hole, results an increased specific surface area compared with the same-size binder with the spherical structure. The specific surface area of the binder ranges from 0.4 m²/g to 1.2 m²/g, and preferably, the specific surface area of the binder ranges from 0.6 m²/g to 0.9 m²/g, thereby improving contact between the ring-shaped binder and the separator and between the ring-shaped binder and the electrode plates, and improving the bonding performance.

Optionally, a surface area to volume ratio of the binder is 0.1×10⁶m⁻¹ to 20×10⁶m⁻¹, and preferably, the surface area to volume ratio of the binder is 0.5×10⁶m⁻¹ to 16×10⁶m⁻¹.

The surface area to volume ratio is the ratio of the total area of the material to the total volume of the material. The binder with the ring-shaped structure, based on the hollow through hole, results an increased surface area to volume ratio compared with the same-size binder with the spherical structure. The surface area to volume ratio of the binder is 0.1×10⁶m⁻¹ to 20×10⁶m⁻¹ and preferably, the surface area to volume ratio of the binder is 0.5×10⁶m⁻¹ to 16×10⁶m⁻¹, which indicates that the surface area of the ring-shaped binder is increased compared with the spherical binder, thereby improving contact between the ring-shaped binder and the separator and between the ring-shaped binder and the electrode plates, and improving the bonding performance.

Optionally, the bulk density of the binder ranges from 0.3g/cm³ to 0.8g/cm³, and preferably, the bulk density of the binder ranges from 0.4g/cm³ to 0.7g/cm³.

Bulk density is the unit volume mass of powder measured immediately after one vessel is completely freely filled with the powder. The binder with the ring-shaped structure has the hollow through hole. After the vessel is filled with the ring-shaped binder, voids are formed by the through hole of the ring-shaped binder. Compared with filling of the same-size spherical binder, the bulk density of the ring-shaped binder is reduced. The bulk density of the binder ranges from 0.3g/cm³ to 0.8g/cm³, and preferably, the bulk density of the binder ranges from 0.4 g/cm³ to 0.7 g/cm³, which indicates that the bonding performance of the binder can be improved by reducing the mass of the ring-shaped binder under certain conditions.

Optionally, the binder is in a circular ring shape.

According to the experimental experience and the surface tension of the material, the circular ring shape is relatively easy to realize.

Optionally, the volume particle size distribution Dv50 of the binder ranges from 1 µm to 15 µm, and preferably, the volume particle size distribution Dv50 of the binder ranges from 3 µm to 12 µm.

In order to improve the adhesion of the binder and the gaps between the separator and the electrode plates, the volume particle size distribution Dv50 of the binder ranges from 1 µm to 15 µm, and preferably, the volume particle size distribution Dv50 of the binder ranges from 3 µm to 12 µm.

Optionally, constituent monomers of the acrylate copolymer include a first polymerized monomer, and the structure of the first polymerized monomer includes: 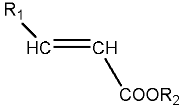 wherein R1 comprises hydrogen or an alkyl group with 1-12 carbon atoms, and R2 comprises an alkyl group with 1-12 carbon atoms.

The structure of the first polymerized monomer contains an ester group, which can improve the compatibility between the acrylate copolymer and an electrolyte solution, enhance the ion conduction capability, and improve the anti-swelling capability of the acrylate copolymer, and serves as a flexible monomer chain segment in a molecular chain segment to adjust the glass transition temperature of the acrylate copolymer, improve the toughness of the binder during application, and facilitate exertion of a good bonding effect.

Optionally, the first polymerized monomer includes one or more of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobomyl methacrylate, lauryl methacrylate, 2-hydroxyethyl methacrylate and 2-hydroxypropyl methacrylate.

Theoretically, the present application does not limit the type of the first polymerized monomer, and the first polymerized monomer satisfies the above-mentioned structure, that is, the first polymerized monomer includes the substances listed above and substances not listed in the present application.

By using any one or more of the above first polymerized monomers, the glass transition temperature of the acrylate copolymer can be adjusted, and the anti-swelling ability of the acrylate copolymer can be improved.

Optionally, constituent monomers of the acrylate copolymer include a second polymerized monomer, and the structure of the second polymerized monomer includes: 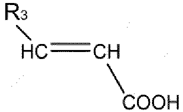 wherein R3 comprises hydrogen or an alkyl group with 1-6 carbon atoms.

The structure of the second polymerized monomer contains a carboxyl group. The carboxyl group has the characteristic of strong polarity, which can improve the adhesion and flexibility of the binder. For example, the carboxyl group can form bonding force with functional groups on the electrode plates and separator materials, thereby improving the bonding effect.

Optionally, the second polymerized monomer includes one or more of acrylic acid, methacrylic acid, butenoic acid and heptenoic acid.

Theoretically, the present application does not limit the type of the second polymerized monomer, and the second polymerized monomer satisfies the above-mentioned structure, that is, the second polymerized monomer includes the substances listed above and substances not listed in the present application.

By using any one or more of the second polymerized monomers, the bonding performance of the acrylate copolymer can be improved.

Optionally, constituent monomers of the acrylate copolymer include a third polymerized monomer, and the structure of the third polymerized monomer includes: 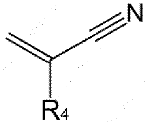 wherein R4 comprises hydrogen atoms or an alkyl group with 1-6 carbon atoms.

The structure of the third polymerized monomer contains an unsaturated cyano group with strong polarity, which is beneficial to improve ion conductivity, and also has anti-swelling and high-bonding effects.

Optionally, the third polymerized monomer includes one or more of acrylonitrile and methacrylonitrile.

Theoretically, the present application does not limit the type of the third polymerized monomer, and the third polymerized monomer satisfies the above-mentioned structure, that is, the third polymerized monomer includes the substances listed above and substances not listed in the present application.

By using any one or more of the third polymerized monomers, the ion conductivity of the acrylate copolymer can be improved, and the bonding performance is improved.

Optionally, constituent monomers of the acrylate copolymer include a fourth polymerized monomer, and the structure of the fourth polymerized monomer includes: 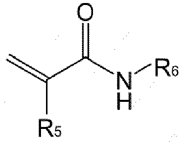 wherein R5 comprises hydrogen atoms or an alkyl group with 1-6 carbon atoms, and R6 comprises hydrogen atoms, a hydroxy-substituted alkyl group with 1-6 carbon atoms, or an alkoxy group with 1-6 carbon atoms.

The structure of the fourth polymerized monomer contains an unsaturated amide group, and the amide group has the functions of improving swelling and enhancing adhesion.

Optionally, the fourth polymerized monomer includes one or more of acrylamide, N-hydroxymethyl acrylamide and N-butoxymethyl acrylamide.

Theoretically, the present application does not limit the type of the fourth polymerized monomer, and the fourth polymerized monomer satisfies the above-mentioned structure, that is, the fourth polymerized monomer includes the substances listed above and substances not listed in the present application.

By using any one or more of the fourth polymerized monomers, the bonding performance of the acrylate copolymer can be improved.

It can be understood that when at least two of the above four monomers are included, the bonding effect will be better. For example, the constituent monomers of the acrylate copolymer at least include the first polymerized monomer and the second polymerized monomer, or the constituent monomers of the acrylate copolymer at least include the first polymerized monomer and the third polymerized monomer, or the constituent monomers of the acrylate copolymer at least include the first polymerized monomer and the fourth polymerized monomer. When the constituent monomers of the acrylate copolymer include the above four monomers at the same time, the performance of the binder is better.

Optionally, constituent monomers of the acrylate copolymer include the first polymerized monomer, the second polymerized monomer, the third polymerized monomer and the fourth polymerized monomer, a mass ratio of the first polymerized monomer, the second polymerized monomer, the third polymerized monomer and the fourth polymerized monomer is 1:(0.01-0.8):(0.01-0.5):(0.01-0.3), and preferably, the mass ratio of the first polymerized monomer, the second polymerized monomer, the third polymerized monomer and the fourth polymerized monomer is 1:(0.1-0.5):(0.15-0.45):(0.1-0.22).

When the constituent monomers of the acrylate copolymer include the above four monomers at the same time, and each monomer component is within the above range, the overall performance is better.

The present application further provides a separator, comprising a substrate and a bonding layer arranged on at least one side of the substrate, and the bonding layer includes the binder for secondary batteries.

Optionally, an areal density of the bonding layer on the substrate ranges from 0.7 g/m²to 3 g/m², preferably 0.8 g/m²to 2 g/m².

The binder based on the ring-shaped structure can increase the contact area between the binder and the electrode plates and between the binder and the separator, that is, good bonding performance can also be realized by reducing the usage amount of the binder with the ring-shaped structure, and accordingly, the areal density of the bonding layer on the substrate ranges from 0.7 g/m² to 3 g/m², and preferably, the areal density of the bonding layer on the substrate ranges from 0.8 g/m² to 2 g/m².

The present application further provides a secondary battery, comprising the separator.

The present application further provides an electrical apparatus, comprising the secondary battery.

### DESCRIPTION OF DRAWINGS

In order to describe technical solutions in examples of the present application or in the prior art more clearly, drawings required to be used in descriptions of the examples or the prior art will be briefly introduced below, it is apparent that the drawings described below are only some examples of the present application, and those of ordinary skill in the art can obtain other drawings according to structures shown in these drawings without creative work.
Fig. 1 is a scanning electron microscope image of a binder according to Example 1 of the present application;
Fig. 2 is a scanning electron microscope image of the binder according to Example 1 of the present application;
Fig. 3 is a schematic flowchart of a method for preparing a binder according to an example of the present application;
Fig. 4 is a schematic diagram of a secondary battery according to an example of the present application;
Fig. 5 is an exploded diagram of the secondary battery according to the example of the present application shown in Fig. 4;
Fig. 6 is a schematic diagram of a battery module according to an example of the present application;
Fig. 7 is a schematic diagram of a battery pack according to an example of the present application;
Fig. 8 is an exploded diagram of the battery pack according to the example of the present application shown in Fig. 7;
Fig. 9 is a schematic diagram of an electrical apparatus using a secondary battery as a power source according to an example of the present application; and
Fig. 10 is a schematic diagram of the binder according to Example 1 of the present application.

Description of reference numerals:

| Number | Name | Number | Name |
|---|---|---|---|
| 1 | Battery pack | 5 | Secondary battery |
| 2 | Upper box body | 51 | Case |
| 3 | Lower box body | 52 | Electrode assembly |
| 4 | Battery module | 53 | Top cover assembly |
| 60 | Circle line | 61 | Through hole |

The objective realization, functional features and advantages of the present application will be further described in conjunction with the examples and with reference to the drawings.

### DETAILED DESCRIPTION

The technical solutions in examples of the present application are clearly and completely described below in combination with drawings in the examples of the present application. Apparently, the described examples are merely some rather than all of the examples of the present application. Based on the examples of the present application, all other examples obtained by those of ordinary skill in the art without making creative efforts shall fall within the scope of protection of the present application.

Hereinafter, embodiments of a binder and a preparation method thereof, a separator including the binder, an electrode assembly, a battery cell, a battery and an electrical apparatus of the present application are described in detail and specifically disclosed with reference to the drawings as appropriate. However, there are situations where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

A "range" disclosed in the present application is defined in terms of a lower limit and an upper limit, and a given range is defined by selecting a lower limit and an upper limit, which define the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and "0-5" is just an abbreviated representation of the combination of these numerical values. In addition, a parameter is expressed as an integer greater than or equal to 2, which is equivalent to disclosing that the parameter may be an integer, such as 2, 3, 4, 5, 6, 7, 8, 9, 10, 11 and 12.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), meaning that the method may include steps (a) and (b) performed sequentially, or may include steps (b) and (a) performed sequentially. For example, the mentioned method may further include a step (c), meaning that the step (c) may be added to the method in any order. For example, the method may include steps (a), (b) and (c), or may further include steps (a), (c) and (b), or may further include steps (c), (a) and (b), or the like.

A battery cell has the problem of opening, that is, a gap is likely to be formed between an electrode plate and a separator, resulting in poor cycling performance of the battery.

For example, the insufficient adhesion between positive and negative electrode plates and the separator commonly causes the problem about the battery cell opening, which cannot meet the requirement of the secondary battery for performance of the coated separator.

The battery cell is formed by bonding the positive and negative electrode plates and the separator. The battery cell has a certain hardness, that is, the positive and negative electrode plates and the separator bonded together are mutually fitted and supported by one another, thereby forming a structure with a certain thickness. The structure with a certain thickness has a certain hardness, and a negative electrode will expand during the charging and discharging process. If the adhesion is weak, gaps will be formed between the positive and negative electrode plates and the separator, and as a result, the positive and negative electrode plates and the separator cannot be mutually fitted and supported by one another, causing battery cell looseness and hardness reduction. At the time, the power performance of the battery cell will become poor, for example, the rate performance will be reduced, and meanwhile the cycling performance will become poor. For example, in an electric vehicle, the battery cell is loose, causing slow charging of the battery, and deterioration of the cycling performance of the battery, which directly leads to shortened battery life. The electric vehicle is required to replace batteries frequently, which increases the cost for the consumer in the electric vehicle.

On that basis, the present application provides a binder for secondary batteries, including an acrylate copolymer, and the binder may be in a ring shape.

The binder refers to a material with adhesive properties, which is used to bond different substances together.

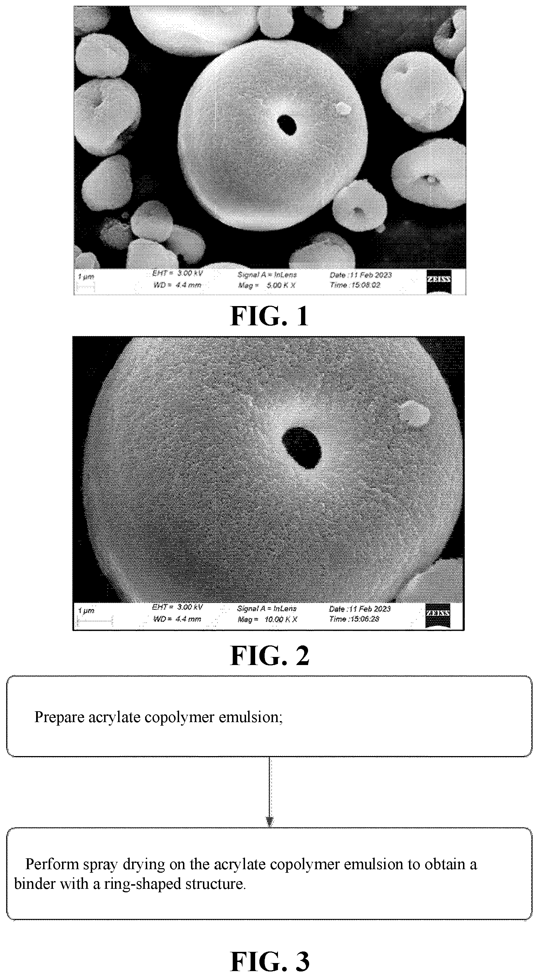

A through hole is formed in a structure of the ring-shaped binder, where the through hole refers to a hole penetrating through two opposite surfaces of the binder, and as shown in Fig. 1 and Fig. 2, the binder is of a ring-shaped structure.

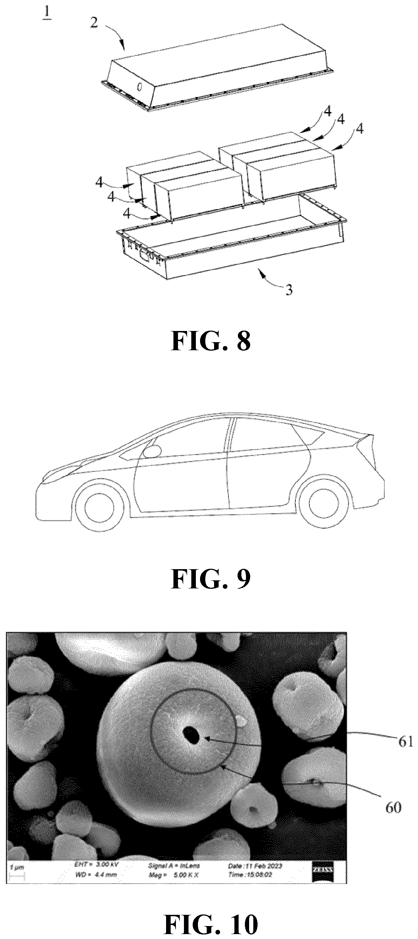

A circle line of the ring shape is shown in Fig. 10, the through hole 61 is formed in the structure of the ring-shaped binder, and the circle line 60 is formed around the through hole 61. It may be understood that when the binder is placed, in a direction towards the through hole 61, on the separator (that is, the through hole 61 is opened towards the separator), the periphery of the through hole 61 will make contact with the separator, and the contact portion constitutes the circle line. Compared with a spherical binder being arranged on the separator, the spherical binder is in point contact with the separator while the ring-shaped binder may make contact with the separator through the circle line, thereby increasing a contact area.

The acrylate copolymer is a general term for polymers produced by copolymerization of acrylate monomers and other comonomers.

The acrylate monomers have acrylate groups in structure, such as methyl acrylate, ethyl acrylate, n-butyl acrylate.

The acrylate copolymer has good adhesion, and the use of the acrylate copolymer makes the bonding performance between the separator and the electrode plates better.

The binder with the ring-shaped structure has a bonding point with a larger area. For example, when the binder with the ring-shaped structure makes contact with the electrode plates, the contact point is the circle line of the ring-shaped binder, however, a contact point of the spherical binder is in point contact, and for the binder with the ring-shaped structure and the spherical binder the same in size, the contact point is larger in area based on the ring-shaped structure, and the bonding performance of the binder with the ring-shaped structure is better; and in addition, the binder with the ring-shaped structure has the hollow through hole, for the binder with the ring-shaped structure and the spherical binder the same in size, the mass of the binder with the ring-shaped structure is smaller, and thus, good bonding performance can be realized when the usage amount of the binder with the ring-shaped structure is reduced.

Coating the binder with the ring-shaped structure on the separator can increase the contact area between the binder and the electrode plates and between the binder and the separator, reduce the usage amount of the binder, meet the requirements for cold pressing adhesion between the separator and the positive and negative electrode plates during the cold pressing process, increase the hardness of the battery cell, and solve the problems such as the battery cell opening and a soft battery cell; at the same time, coating the binder on the separator to be applied to the secondary battery can increase large-clamp cycling performance of the secondary battery.

The large-clamp cycling performance is a kind of cycle functional test performance of the battery cell. During the test, a clamp is installed onto the battery cell, a certain force is applied to the clamp to squeeze the battery cell, the battery cell will expand after being fully charged, and due to the double extrusion of clamping force of the clamp and force of expansion, the battery cell will deform. The test is used to test the shape retention performance and compressive performance of the battery cell. The binder according to the solution is adopted and is good in bonding performance, such that the expansion of the battery cell is weakened, and the shape of the battery cell is kept well. The performance of the battery cell adopting the binder in the present application is kept well under the large-clamp test condition, which indicates that the battery cell adopting the binder according to the solution is good in deformation retentivity, and after the battery cell is assembled into the battery, since the battery cell is not likely to deform, a space for installing the battery cell in the battery can be saved, and thus, the battery can be made smaller. Because, if the battery cell is easily deformed, the battery cell will squeeze adjacent structures. In order to improve this phenomenon, more space is required to accommodate the deformed battery cell, that is, a space for accommodating a deformed portion of the battery cell is required to be reserved in the battery, which occupies more space in the battery.

At the same time, the large-clamp cycling performance of the battery cell is good, which also indicates that the cycling performance of the battery cell is good. For example, after the battery cell expands, gaps between the electrode plates and the separator are enlarged, causing a path for lithium ions to travel between a positive electrode and a negative electrode to be long, which leads to cycle deterioration (taking the lithium-ion battery as an example, and of course, other types of secondary batteries may also be adopted).

The binder of the present application can increase the tight fit between the separator and the electrode plates, improve the discharge capacity of the battery, reduce the internal resistance and polarization losses, prolong the cycle life of the battery, and increase the utilization rate of the secondary battery.

In an example, the specific surface area of the binder ranges from 0.4 m²/g to 1.2 m²/g, and preferably, the specific surface area of the binder ranges from 0.6 m²/g to 0.9 m²/g.

The specific surface area refers to a total area of the material per unit mass, and the unit is m ²/g.

Test of specific surface area: the BET specific surface area was measured by an N₂ adsorption BET method.

A NOVA 2000 specific surface area and pore analyzer of the American Quanta Company was adopted, and high-purity nitrogen gas greater than or equal to 99.999% was used as an adsorbent. A spherical sample tube with the diameter of 20 mm was selected, a binder sample of 1.4000 g±0.2000 g was weighed and sleeved with a heating pack, and a vacuum pump was used to vacuumize to 10⁻²Torr or above. After the pressure was stable, the temperature was slowly increased to a certain temperature, preprocessing time was controlled, cooling was performed for 30 min after preprocessing, and a sample mass was weighed; and the preprocessed sample was subject to a whole-process adsorption-desorption test to obtain an isothermal adsorption-desorption curve, data was processed by software of an instrument, and as a result, specific surface area parameters of the binder were obtained.

The specific surface area refers to the total area of the material per unit mass. The binder with the ring-shaped structure, based on the hollow through hole, results an increased specific surface area compared with the same-size binder with the spherical structure. The specific surface area of the binder ranges from 0.4 m²/g to 1.2 m²/g, and preferably, the specific surface area of the binder ranges from 0.6 m²/g to 0.9 m²/g, thereby improving contact between the ring-shaped binder and the separator and between the ring-shaped binder and the electrode plates, and improving the bonding performance.

In the range of 0.4 m²/g to 1.2 m²/g, the value includes a minimum value and a maximum value in this range, and every value between such minimum value and maximum value. Specific examples include but not limited to point values in the examples, 0.4 m²/g, 0.5 m²/g, 0.6 m²/g, 0.7 m²/g, 0.8 m²/g, 0.9 m²/g, 1.0 m²/g, 1.1 m²/g, 1.2 m²/g, etc., and a range value between any two point values above.

In the range of 0.6 m²/g to 0.9 m²/g, the value includes a minimum value and a maximum value in this range, and every value between such minimum value and maximum value. Specific examples include but not limited to point values in the examples, 0.6 m²/g, 0.7 m²/g, 0.8 m²/g, 0.9 m²/g, etc., and a range value between any two point values above.

In an example, a surface area to volume ratio of the binder is 0.1×10⁶m⁻¹ to 20×10⁶m⁻¹, and preferably, the surface area to volume ratio of the binder is 0.5×10⁶m⁻¹ to 16×10⁶m⁻¹.

The surface area to volume ratio is the ratio of the total area of the material to the total volume of the material.

A method for testing a surface area to volume ratio may be used to test the surface area and the volume of a certain mass of binder separately, and then divide the value of the surface area and the volume to obtain the surface area to volume ratio. Define m1 g of binder to be tested. The method for testing a surface area may be implemented by utilizing the above method for testing a specific surface area. The above specific surface area is defined to be am²/g, thus, the surface area of the m1 g of binder is (m1*a), and the unit is m². A drainage method is adopted to test the volume of the m1 g of binder, water with the volume of V1 is weighed and placed in a vessel, a mixed solution of the binder is obtained, the volume of the mixed solution is measured to be V2, and thus, the volume of the m1 g of binder is V2-V1; and a calculation formula for the surface area to volume ratio is (m1*a)/(V2-V1), and the unit is m⁻¹.

The binder with the ring-shaped structure, based on the hollow through hole, results an increased surface area to volume ratio compared with the same-size binder with the spherical structure. The surface area to volume ratio of the binder is 0.1×10⁶m⁻¹ to 20×10⁶m⁻¹, and preferably, the surface area to volume ratio of the binder is 0.5×10⁶m⁻¹ to 16×10⁶m⁻¹, which indicates that the surface area of the ring-shaped binder is increased compared with the spherical binder, thereby improving contact between the ring-shaped binder and the separator and between the ring-shaped binder and the electrode plates, and improving the bonding performance.

In the range of 0.1×10⁶m⁻¹ to 20×10⁶m⁻¹, the value includes a minimum value and a maximum value in this range, and every value between such minimum value and maximum value. Specific examples include but not limited to point values in the examples, 0.1×10⁶m⁻¹ , 1×10⁶m⁻¹ , 2×10⁶m⁻¹ , 3×10⁶m⁻¹ , 4×10⁶m⁻¹ , 5×10⁶m⁻¹ , 6×10⁶m⁻¹ , 7×10⁶m⁻¹ , 8×10⁶m⁻¹,9×10⁶m⁻¹,10×10⁶m⁻¹, 11×10⁶m⁻¹, 12×10⁶m⁻¹, 13×10⁶m⁻¹, 14×10⁶m⁻¹, 15×10⁶m⁻¹, 16×10⁶m⁻¹, 17×10⁶m⁻¹, 18×10⁶m⁻¹,19×10⁶m⁻¹, 20×10⁶m⁻¹, etc., and a range value between any two point values above.

In the range of 0.5×10⁶m⁻¹ to 16×10⁶m⁻¹, the value includes a minimum value and a maximum value in this range, and every value between such minimum value and maximum value. Specific examples include but not limited to point values in the examples, 0.5×10⁶m⁻¹, 1×10⁶m⁻¹ , 2×10⁶m⁻¹ , 3×10⁶m⁻¹ , 4×10⁶m⁻¹ , 5×10⁶m⁻¹ , 6×10⁶m⁻¹ , 7×10⁶m⁻¹ , 8×10⁶m⁻¹, 9×10⁶m⁻¹, 10×10⁶m⁻¹, 11×10⁶m⁻¹, 12×10⁶m⁻¹, 13×10⁶m⁻¹, 14×10⁶m⁻¹, 15×10⁶m⁻¹, 16×10⁶m⁻¹, etc., and a range value between any two point values above.

In an example, the bulk density of the binder ranges from 0.3 g/cm³ to 0.8 g/cm³, and preferably, the bulk density of the binder ranges from 0.4 g/cm³ to 0.7 g/cm³.

Bulk density is the unit volume mass of powder measured immediately after one vessel is completely freely filled with the powder.

The specific test steps include: a compaction instrument method was adopted to place a sample into a 100 mL measuring cylinder of a compaction instrument, a device was started, a vibration apparatus of a vibration instrument vibrated the measuring cylinder to compact the sample, the sample was constantly added in the experiment process until the sample volume was not reduced any more, finally, the mass of the sample was weighed, and the bulk density was obtained by dividing the sample mass by the sample volume.

The binder with the ring-shaped structure has the hollow through hole. After the vessel is filled with the ring-shaped binder, voids are formed by the through hole of the ring-shaped binder. Compared with filling of the same-size spherical binder, the bulk density of the ring-shaped binder is reduced. The bulk density of the binder ranges from 0.3g/cm³ to 0.8g/cm³, and preferably, the bulk density of the binder ranges from 0.4 g/cm³ to 0.7 g/cm³, which indicates that the bonding performance of the binder can be improved by reducing the mass of the ring-shaped binder under certain conditions.

In the range of 0.3 g/cm³ to 0.8 g/cm³, the value includes a minimum value and a maximum value in this range, and every value between such minimum value and maximum value. Specific examples include but not limited to point values in the examples, 0.3 g/cm³, 0.4 g/cm³, 0.5 g/cm³, 0.6 g/cm³, 0.7 g/cm³, 0.8 g/cm³, etc., and a range value between any two point values above.

In the range of 0.4 g/cm³ to 0.7 g/cm³, the value includes a minimum value and a maximum value in this range, and every value between such minimum value and maximum value. Specific examples include but not limited to point values in the examples, 0.4 g/cm³, 0.5 g/cm³, 0.6 g/cm³, 0.7 g/cm³, etc., and a range value between any two point values above.

In an example, the binder may be in a circular ring shape.

According to experimental experience and the effect of material surface tension, the circular ring shape is relatively easy to realize. The binder in the present application may be in the circular ring shape, which is further to be understood that the circular ring shape in the present application may be a shape similar to the circular ring. For example, as shown in Fig. 1, structures of some binders are not in a perfect circular ring shape. For example, some portions are flattened to form structures similar to the circular ring shape.

In an example, the volume particle size distribution Dv50 of the binder ranges from 1 µm to 15 µm, and preferably, the volume particle size distribution Dv50 of the binder ranges from 3 µm to 12 µm.

Dv50 means that in sample particles, the particle size of 50 % of the total volume of particles is greater than this value, and the particle size of the other 50 % of the total volume of particles is less than this value; and Dv50 may represent a median particle size of the sample.

The volume particle size distribution Dv50 of the binder may be tested by methods known in the art. As an example, please refer to GB/T 19077-2016, a Malvern Mastersizer is used to perform a representation test, for example, a Malvern Mastersizer-3000 and other instruments are used for testing.

In order to improve the adhesion of the binder and the gaps between the separator and the electrode plates, the volume particle size distribution Dv50 of the binder ranges from 1 µm to 15 µm, and preferably, the volume particle size distribution Dv50 of the binder ranges from 3 µm to 12 µm.

In the range of 1 µm to 15 µm, the value includes a minimum value and a maximum value in this range, and every value between such minimum value and maximum value. Specific examples include but not limited to point values in the examples, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, etc., and a range value between any two point values above.

In the range of 3 µm to 12 µm, the value includes a minimum value and a maximum value in this range, and every value between such minimum value and maximum value. Specific examples include but not limited to point values in the examples, 3 µm, 4 µm, 5 µm, 6 µm, 7 µm, 8 µm, 9 µm, 10 µm, 11 µm, 12 µm, etc., and a range value between any two point values above.

In an example, constituent monomers of the acrylate copolymer include a first polymerized monomer, and the structure of the first polymerized monomer includes: 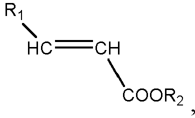 wherein R1 includes hydrogen or an alkyl group with 1-12 carbon atoms, and R2 includes an alkyl group of 1-12 carbon atoms.

The structure of the first polymerized monomer contains an ester group, which can improve the compatibility between the acrylate copolymer and an electrolyte solution, enhance the ion conduction capability, and improve the anti-swelling capability of the acrylate copolymer, and serves as a flexible monomer chain segment in a molecular chain segment to adjust the glass transition temperature of the acrylate copolymer, improve the toughness of the binder during application, and facilitate exertion of a good bonding effect.

In an example, the first polymerized monomer includes one or more of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobomyl methacrylate, lauryl methacrylate, 2-hydroxyethyl methacrylate and 2-hydroxypropyl methacrylate.

Theoretically, the present application does not limit the type of the first polymerized monomer, and the first polymerized monomer satisfies the above-mentioned structure, that is, the first polymerized monomer includes the substances listed above and substances not listed in the present application.

By using any one or more of the above first polymerized monomers, the glass transition temperature of the acrylate copolymer can be adjusted, and the anti-swelling ability of the acrylate copolymer can be improved.

In an example, constituent monomers of the acrylate copolymer include a second polymerized monomer, and the structure of the second polymerized monomer includes: 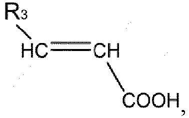 wherein R3 includes hydrogen or an alkyl group with 1-6 carbon atoms.

The structure of the second polymerized monomer contains a carboxyl group. The carboxyl group has the characteristic of strong polarity, which can improve the adhesion and flexibility of the binder. For example, the carboxyl group can form bonding force with functional groups on the electrode plates and separator materials, thereby improving the bonding effect.

In an example, the second polymerized monomer includes one or more of acrylic acid, methacrylic acid, butenoic acid and heptenoic acid.

Theoretically, the present application does not limit the type of the second polymerized monomer, and the second polymerized monomer satisfies the above-mentioned structure, that is, the second polymerized monomer includes the substances listed above and substances not listed in the present application.

By using any one or more of the second polymerized monomers, the bonding performance of the acrylate copolymer can be improved.

In an example, constituent monomers of the acrylate copolymer include a third polymerized monomer, and the structure of the third polymerized monomer includes: 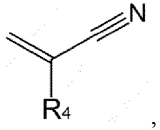 wherein R4 includes hydrogen atoms or an alkyl group with 1-6 carbon atoms.

The structure of the third polymerized monomer contains an unsaturated cyano group with strong polarity, which is beneficial to improve ion conductivity, and also has anti-swelling and high-bonding effects.

In an example, the third polymerized monomer includes one or more of acrylonitrile and methacrylonitrile.

Theoretically, the present application does not limit the type of the third polymerized monomer, and the third polymerized monomer satisfies the above-mentioned structure, that is, the third polymerized monomer includes the substances listed above and substances not listed in the present application.

By using any one or more of the third polymerized monomers, the ion conductivity of the acrylate copolymer can be improved, and the bonding performance is improved.

In an example, constituent monomers of the acrylate copolymer include a fourth polymerized monomer, and the structure of the fourth polymerized monomer includes: 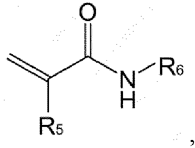 wherein R5 includes hydrogen atoms or an alkyl group with 1-6 carbon atoms, and R6 includes hydrogen atoms, a hydroxy-substituted alkyl group with 1-6 carbon atoms, or an alkoxy group with 1-6 carbon atoms.

The structure of the fourth polymerized monomer contains an unsaturated amide group, and the amide group has the functions of improving swelling and enhancing adhesion.

In an example, the fourth polymerized monomer includes one or more of acrylamide, N-hydroxymethyl acrylamide and N-butoxymethyl acrylamide.

Theoretically, the present application does not limit the type of the fourth polymerized monomer, and the fourth polymerized monomer satisfies the above-mentioned structure, that is, the fourth polymerized monomer includes the substances listed above and substances not listed in the present application.

By using any one or more of the fourth polymerized monomers, the bonding performance of the acrylate copolymer can be improved.

It can be understood that when at least two of the above four monomers are included, the bonding effect will be better. For example, the constituent monomers of the acrylate copolymer at least include the first polymerized monomer and the second polymerized monomer, or the constituent monomers of the acrylate copolymer at least include the first polymerized monomer and the third polymerized monomer, or the constituent monomers of the acrylate copolymer at least include the first polymerized monomer and the fourth polymerized monomer. When the constituent monomers of the acrylate copolymer include the above four monomers at the same time, the performance of the binder is better.

In an example, the constituent monomers of the acrylate copolymer include the first polymerized monomer, the second polymerized monomer, the third polymerized monomer and the fourth polymerized monomer. A mass ratio of the first polymerized monomer, the second polymerized monomer, the third polymerized monomer and the fourth polymerized monomer is 1:(0.01-0.8):(0.01-0.5):(0.01-0.3), and preferably, the mass ratio of the first polymerized monomer, the second polymerized monomer, the third polymerized monomer and the fourth polymerized monomer is 1:(0.1-0.5):(0.15-0.45):(0.1-0.22).

When the constituent monomers of the acrylate copolymer include the above four monomers at the same time, and each monomer component is within the above range, the overall performance is better.

According to a mass ratio test method, in the preparation process of the acrylate copolymer, the mass of each monomer added for preparing the acrylate copolymer in the reaction process is recorded, the mass of the first polymerized monomer is recorded as m1, the mass of the second polymerized monomer is recorded as m2, the mass of the third polymerized monomer is recorded as m3, the mass of the fourth polymerized monomer is recorded as m4, and the mass ratio of the four monomers is m1:m2:m3:m4.

In the 1:(0.01-0.8):(0.01-0.5):(0.01-0.3), the value includes a minimum value and a maximum value in this range, and every value between such minimum value and maximum value. Specific examples include but not limited to point values in the examples, 1:0.01:0.01:0.01, 1:0.5:0.25: 0.15, 1:0.8:0.5:0.3, etc., and a range value between any two point values above.

In the 1:(0.1-0.5):(0.15-0.45):(0.1-0.22), the value includes a minimum value and a maximum value in this range, and every value between such minimum value and maximum value. Specific examples include but not limited to point values in the examples, 1:0.1:0.15:0.1, 1:0.3:0.3:0.15, 1:0.5:0.45:0.22, etc., and a range value between any two point values above.

In an example, the present application further provides a method for preparing a binder, including: acrylate copolymer emulsion was prepared; and spray drying was performed on the acrylate copolymer emulsion to obtain the ring-shaped binder.

Spray drying means that through the mechanical action, a material (the acrylate copolymer emulsion) required to be dried is dispersed into fine mist-like particles (increasing a water evaporation area, and accelerating the drying process) to make contact with hot air, and in an instant, most of water is removed, and solid substances in the material are dried into powder.

The acrylate copolymer emulsion is prepared by means of emulsion polymerization, and the acrylate copolymer emulsion is spray-dried to obtain the ring-shaped binder. The mechanism is that due to the volatilization of water, primary emulsion particles of the acrylate copolymer are closely packed together to form the ring-shaped binder.

In an example, the step of preparing the acrylate copolymer emulsion includes: water, an emulsifier and constituent monomers of acrylate copolymer were added to a vessel to be stirred and emulsified to obtain pre-emulsion of the monomers; the emulsifier and water were added to a reaction vessel to be stirred and emulsified, the pre-emulsion and an initiator solution were added under a heating condition to be heated for reaction, and then the acrylate copolymer emulsion was obtained.

The pre-emulsion is a solution obtained by pre-emulsifying the monomers. Emulsification refers to a kind of action of evenly dispersing liquid in the other immiscible liquid in the form of extremely tiny droplets, and water, the emulsifier and the constituent monomers of the acrylate copolymer are blended and stirred, such that the constituent monomers of the acrylate copolymer are dispersed in water under the action of the emulsifier.

Emulsion polymerization is a process in which the monomers are dispersed in water to form the emulsion through the emulsifier and mechanical stirring, and then an initiator is added to initiate the polymerization of the monomers.

The emulsifier is a type of substance that can transform immiscible oil and water into an emulsion, which is difficult to separate into layers. The emulsifier is typically a surfactant having properties of both hydrophilic polar groups and hydrophobic (oil-loving) nonpolar groups.

The initiator is a substance that initiates the polymerization of the monomers. For example, free radical initiators refer to a kind of compounds that are easily decomposed into free radicals (i.e., primary free radicals) by heat, and can be used to initiate free radical polymerization and copolymerization reactions of alkene and diene monomers.

In the step of preparing the acrylate copolymer emulsion, the steps of first pre-emulsification and then polymerization reaction are adopted, such that the monomers are mixed more evenly, and obtained acrylate copolymer particles are more uniform and have more stable properties. It is beneficial to form the ring-shaped binder in the spray-drying process.

As the most commonly used binder, polyvinylidene fluoride is widely applied to the separator, but the price of polyvinylidene fluoride has risen sharply at this stage, leading to tight market supply. Coating a polyvinylidene fluoride polymer on the surface of the separator of the lithium battery can partially solve the problem of high-temperature shrinkage of the separator; the battery cell is cold-pressed after being wound, but the conventional polyvinylidene fluoride is a homopolymer, the degree of crystallinity is about 50 %, resulting in insufficient adhesion with the positive and negative electrode plates, and the problem of battery cell opening often occurs, which cannot meet the requirements of the secondary battery for coated separator properties.

That is, coating the polyvinylidene fluoride polymer on the surface of the separator of the battery can partially solve the problem of high-temperature shrinkage of the separator; the battery cell is cold-pressed after being wound, but the conventional polyvinylidene fluoride is the homopolymer, the degree of crystallinity is about 50 %, resulting in insufficient adhesion with the positive and negative electrode plates, which leads to the problem of frequent battery cell opening. The opening of the battery cell leads to the formation of the gaps between the electrode plates and the separator, the overall structure of the battery cell is loose, the hardness of the battery cell is reduced, and the cycling performance of the battery cell is deteriorated.

The ring-shaped binder of the present application is applied to the separator, by coating the ring-shaped binder on the separator can increase the contact area between the binder and the electrode plates and between the binder and the separator, reduce the usage amount, meet the requirements for cold pressing adhesion between the separator and the positive and negative electrode plates during the cold pressing process, increase the hardness of the battery cell, and solve the problems such as the battery cell opening and the soft battery cell; at the same time, coating the binder on the separator to be applied to the secondary battery can increase the large-clamp cycling performance of the secondary battery.

In an example, the present application further provides a separator, including a substrate and a bonding layer arranged on at least one side of the substrate, and the bonding layer includes the above-mentioned binder for secondary batteries; or, the bonding layer includes the binder prepared by the method for preparing a binder for secondary batteries.

The bonding layer refers to a structure constituted by the binder coating the separator.

Before the separator is coated with the binder, binder slurry is first prepared, the binder is dissolved in water to prepare the slurry, the separator is coated with the slurry and then dried, and the bonding layer is obtained.

It can be understood that the binder does not have bonding force at room temperature (the room temperature is about 23±2°C) and no pressure after drying, that is, the side, deviating from the separator, of the bonding layer is non-adhesive during the process without applying pressure to the separator, and separator winding and unwinding can be achieved. After a certain pressure is applied, the binder shows pressure sensitivity and good bonding performance, and satisfies the requirement for bonding force between the separator and the positive and negative electrode plates. Meanwhile, the bonding performance is achieved by forming intermolecular forces with molecules on both the separator and the electrode plates, thereby effectively bonding the separator and the electrode plates by the binder.

It can also be understood that after cold pressing, the hollow through hole of the ring-shaped binder is not completely blocked, thereby forming voids, which are conducive to the infiltration of the electrolyte solution and improve transmission of the lithium ions (taking the lithium-ion battery as an example, of course, other types of secondary batteries may also be adopted).

The binder powder prepared by the spray drying process achieves non-cohesiveness under no pressure at room temperature.

Pressure sensitivity means that after the binder is squeezed, the binder can deform under force and penetrate into pores of the separator and the electrode plates to play a mechanical interlocking role, thereby achieving a bonding effect.

In an example, an areal density of the bonding layer on the substrate is 0.7 g/m²to 3 g/m², preferably 0.8 g/m²to 2 g/m².

Areal density refers to the mass of the bonding layer coating one side of the separator.

A method for testing an areal density includes: a separator with a certain area is taken to obtain a separator area S, a weight M1 of the separator and the binder is weighed, a weight M2 of a separator, having the same area S, uncoated with the binder is weighed, and an areal density calculation formula of the binder is (M1-M2)/S.

The binder with the ring-shaped structure can increase the contact area between the binder and the electrode plates and between the binder and the separator, that is, good bonding performance can also be realized by reducing the usage amount of the binder with the ring-shaped structure, and accordingly, the areal density of the bonding layer on the substrate ranges from 0.7g/m² to 3g/m², preferably 0.8g/m² to 2g/m².

In the range of 0.7 g/m² to 3 g/m², the value includes a minimum value and a maximum value in this range, and every value between such minimum value and maximum value. Specific examples include but not limited to point values in the examples, 0.7 g/m², 0.8 g/m², 0.9 g/m², 1 g/m², 1.5 g/m², 2 g/m², 2.5 g/m², 3 g/m², etc., and a range value between any two point values above.

In the range of 0.8 g/m² to 2 g/m², the value includes a minimum value and a maximum value in this range, and every value between such minimum value and maximum value. Specific examples include but not limited to point values in the examples, 0.8 g/m², 0.9 g/m², 1 g/m², 1.2 g/m², 1.5 g/m², 1.7 g/m², 1.9 g/m², 2 g/m², etc., and a range value between any two point values above.

An example of the present application further provides a secondary battery, including the above-mentioned separator.

The secondary battery includes a battery module, a battery cell, a battery pack, and other forms. When the secondary battery is the battery cell, the battery cell includes the above-mentioned separator; when the secondary battery is the battery module, the battery module includes the above-mentioned separator; and when the secondary battery is the battery pack, the battery pack includes the above-mentioned separator.

An example of the present application further provides an electrical apparatus, including the above-mentioned battery cell or battery.

In addition, the electrode assembly, the battery cell, the battery and the electrical apparatus of the present application are described below with reference to the drawings as appropriate.

In an embodiment of the present application, an electrode assembly is provided.

Generally, the electrode assembly includes a positive electrode plate, a negative electrode plate, an electrolyte, and a separator. During the charging and discharging process of the battery, active ions are intercalated and deintercalated back and forth between the positive electrode plate and the negative electrode plate. The electrolyte serves to conduct ions between the positive electrode plate and the negative electrode plate. The separator is arranged between the positive electrode plate and the negative electrode plate, and mainly has a function of preventing a short circuit between a positive electrode and a negative electrode while allowing ions to pass through. The separator is the above separator provided by the present application.

The positive electrode plate includes a positive electrode current collector and a positive electrode film layer arranged on at least one surface of the positive electrode current collector.

As an example, the positive electrode current collector has two opposite surfaces in its own thickness direction, and the positive electrode film layer is arranged on either or both of the two opposite surfaces of the positive electrode current collector.

In some embodiments, the positive electrode current collector can be a metal foil or a composite current collector. For example, an aluminum foil can be used as the metal foil. The composite current collector may include a high molecular material substrate layer and a metal layer formed on at least one surface of the high molecular material substrate layer. The composite current collector may be formed by forming a metal material (aluminum, an aluminum alloy, nickel, a nickel alloy, titanium, a titanium alloy, silver, a silver alloy, etc.) on a high molecular material substrate (e.g., polypropylene (PP), polyethylene terephthalate (PET), polybutylene terephthalate (PBT), polystyrene (PS), and polyethylene (PE)).

In some embodiments, when the electrode assembly is the lithium-ion battery, a positive electrode active material for the lithium-ion battery well known in the art may be used as the positive electrode active material. As an example, the positive electrode active material may include at least one of the following materials: a lithium-containing phosphate of an olivine structure, a lithium transition metal oxide, and respective modified compounds thereof. However, the present application is not limited to these materials, and other conventional materials useful as positive electrode active materials for batteries can also be used. These positive electrode active materials may be used either alone or in combination with two or more types. Examples of the lithium transition metal oxide may include but not limited to at least one of lithium-cobalt oxide (e.g., LiCoO₂), lithium-nickel oxide (e.g., LiNiO₂), lithium-manganese oxide (e.g., LiMnO₂ and LiMn₂O₄), lithium-nickel-cobalt oxide, lithium-manganese-cobalt oxide, lithium-nickel-manganese oxide, lithium-nickel-cobalt-manganese oxide (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), lithium-nickel-cobalt-aluminum oxide (e.g., LiNi_{0.85}Co_{0.15}Al_{0.05}O₂) and respective modified compounds thereof. Examples of the lithium-containing phosphate of the olivine structure may include but not limited to at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium manganese iron phosphate, and lithium manganese iron phosphate-carbon composite.

In some embodiments, the positive electrode film layer further optionally comprises a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode film layer further optionally comprises a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate may be prepared by a following manner: the components for preparing the positive electrode plate, such as the positive electrode active material, the conductive agent, the binder and any other component were dispersed in a solvent (e.g., N-methyl pyrrolidone) to form a positive electrode slurry; and the positive electrode current collector was coated with the positive electrode slurry, and followed by drying, cold pressing and other procedures, the positive electrode plate was obtained.

The negative electrode plate includes a negative electrode current collector and a negative electrode film layer arranged on at least one surface of the negative electrode current collector, where the negative electrode film layer includes a negative electrode active material.

As an example, the negative electrode current collector has two opposite surfaces in its own thickness direction, and the negative electrode film layer is arranged on either or both of the two opposite surfaces of the negative electrode current collector.

In some embodiments, the negative electrode current collector can be a metal foil or a composite current collector. For example, a copper foil can be used as the metal foil. The composite current collector may include a high molecular material substrate layer and a metal layer formed on at least one surface of a high molecular material substrate. The composite current collector may be formed by forming a metal material (copper, a copper alloy, nickel, a nickel alloy, titanium, a titanium alloy, silver, a silver alloy, etc.) on the high molecular material substrate (e.g., polypropylene (PP), polyethylene terephthalate (PET), polybutylene terephthalate (PBT), polystyrene (PS), and polyethylene (PE)).

In some embodiments, a negative electrode active material for the battery well known in the art may be used as the negative electrode active material. As an example, the negative electrode active material may include at least one of the following materials: artificial graphite, natural graphite, soft carbon, hard carbon, a silicon-based material, a tin-based material, and lithium titanate, etc. The silicon-based material may include at least one of elemental silicon, a silicon-oxygen compound, a silicon-carbon composite, a silicon-nitrogen composite, and a silicon alloy. The tin-based material may include at least one of elemental tin, a tin-oxygen compound, and a tin alloy. However, the present application is not limited to these materials, and other conventional materials capable of being used as the negative electrode active material for the battery may also be used. These negative electrode active materials may be used alone or in combination of two or more thereof.

In some embodiments, the negative electrode film layer further optionally includes a binder. The binder may include at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may include at least one of superconducting carbon, acetylene black, carbon black, Ketjen black, carbon dots, carbon nanotubes, graphene, and carbon nanofibers.

In some embodiments, the negative electrode film layer may further optionally include other auxiliaries, such as a thickener (e. g., sodium carboxymethyl cellulose (CMC-Na)).

In some embodiments, the negative electrode plate may be prepared by a following manner: the components for preparing the negative electrode plate, such as the negative electrode active material, the conductive agent, the binder and any other component were dispersed in a solvent (e.g., deionized water) to form a negative electrode slurry; and the negative electrode current collector was coated with the negative electrode slurry, and followed by drying, cold pressing and other procedures, the negative electrode plate was obtained.

The electrolyte serves to conduct ions between the positive electrode plate and the negative electrode plate. The type of the electrolyte is not particularly limited in the present application, and may be selected according to requirements.

In some embodiments, the electrolyte is an electrolyte solution. The electrolyte solution includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone and diethyl sulfone.

In some embodiments, the electrolyte solution may further optionally include an additive. For example, the additive may include a negative electrode film-forming additive and a positive electrode film-forming additive, and may also include additives that can improve certain battery properties, such as additives that improve battery overcharge performance, and additives that improve battery high or low temperature performance.

In some embodiments, the electrode assembly further includes a separator. The type of the separator is not particularly limited in the present application, and any well-known separator with a porous structure having good chemical stability and mechanical stability may be selected.

In some embodiments, the material of the separator may include at least one of glass fiber, non-woven cloth, polyethylene, polypropylene, and polyvinylidene fluoride. The separator may be a single-layer film or a multi-layer composite film, which is not particularly limited. When the separator is the multi-layer composite film, the material of each layer may be the same or different, which is not particularly limited.

In some embodiments, the positive electrode plate, the negative electrode plate, and the separator may be made into the electrode assembly by a winding process or a stacking process.

In some embodiments, the electrode assembly may include an outer package. The outer package may be used to encapsulate the above-mentioned electrode assembly and electrolyte.

In some embodiments, the outer package of the electrode assembly may be a hard case, such as a hard plastic case, an aluminum case, or a steel case. The outer package of the electrode assembly may also be a soft pack, such as a bag-type soft pack. The material of the soft pack may be plastic, and as plastic, polypropylene, polybutylene terephthalate, polybutylene succinate, etc. may be enumerated.

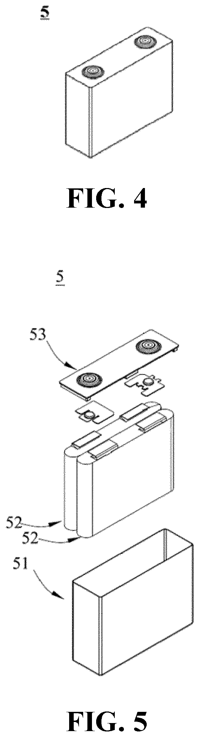

The present application has no particular limitation on the shape of the electrode assembly, which may be cylindrical, square or any other shape. For example, Fig. 4 is an example of a secondary battery 5 having a square structure.

In some embodiments, referring to Fig. 5, the outer package may include a case 51 and a cover plate 53. The case 51 may include a bottom plate and a side plate connected to the bottom plate, and an accommodating cavity is defined by the bottom plate and the side plate. The case 51 has an opening communicating with the accommodating cavity, and the cover plate 53 may cover the opening to close the accommodating cavity. The electrode assembly 52 may be formed by the positive electrode plate, the negative electrode plate, and the separator by a winding process or a stacking process. The electrode assembly 52 is encapsulated in the accommodating cavity. The electrolyte solution impregnates the electrode assembly 52. The secondary battery 5 may include one or more electrode assemblies 52, which can be selected by those skilled in the art according to specific actual requirements.

In some embodiments, the electrode assemblies may be assembled into a battery module, the battery module may include one or more electrode assemblies, and the specific number may be selected by those skilled in the art according to the application and capacity of the battery module.

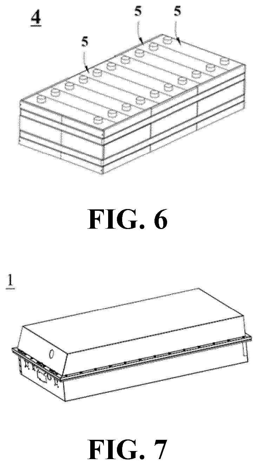

Fig. 6 is an example of a battery module 4. Referring to Fig. 6, in the battery module 4, a plurality of secondary batteries 5 can be sequentially arranged along the length direction of the battery module 4. Of course, any other arrangement is also possible. The plurality of secondary batteries 5 may further be fixed by fasteners.

Optionally, the battery module 4 may further include a shell with an accommodating space, and the plurality of secondary batteries 5 are accommodated in the accommodating space.

In some embodiments, the battery module may further be assembled into a battery pack, the battery pack may include one or more battery modules, and the specific number may be selected by those skilled in the art according to the use and capacity of the battery pack.

Fig. 7 and Fig. 8 are an example of a battery pack 1. Referring to Fig. 7 and Fig. 8, the battery pack 1 may include a battery box and a plurality of battery modules 4 arranged in the battery box. The battery box includes an upper box body 2 and a lower box body 3, and the upper box body 2 can cover the lower box body 3 to form a closed space for accommodating the battery modules 4. The plurality of battery modules 4 may be arranged in the battery box in any manner.

In addition, the present application further provides an electrical apparatus, and the electrical apparatus includes at least one of the electrode assembly, the battery module, or the battery pack provided in the present application. The electrode assembly, the battery module, or the battery pack may be used as a power source for the electrical apparatus, and may also be used as an energy storage unit for the electrical apparatus. The electrical apparatus may include but not limited to a mobile device (e.g., a mobile phone and a laptop), an electric vehicle (e.g., an all-electric vehicle, a hybrid electric vehicle, a plug-in hybrid electric vehicle, an electric bicycle, an electric scooter, an electric golf cart and an electric truck), an electric train, a ship, a satellite, and an energy storage system, etc.

For the electrical apparatus, the electrode assembly, the battery module, or the battery pack may be selected according to the requirements during use.

Fig. 9 is an example of an electrical apparatus. The electrical apparatus is an all-electric vehicle, a hybrid electric vehicle or a plug-in hybrid electric vehicle, etc. In order to meet the requirements of the electrical apparatus for high power and high energy density of the electrode assembly, the battery pack or the battery module may be used.

As another example, the apparatus may be a mobile phone, a tablet, a laptop, etc. The apparatus is generally required to be light and thin, and may use an electrode assembly as a power source.

### Examples

Examples of the present application will be described hereinafter. The examples described below are exemplary and are only used to explain the present application, and are not to be construed as limiting the present application. Examples in which specific techniques or conditions are not specified are performed according to the techniques or conditions described in the literatures in the art or the product specifications. Where manufacturers are not specified, the reagents or instruments used are conventional products and are commercially available.

### Example 1

### Preparation of acrylate copolymer

(1) 150 g of deionized water and 3.6 g of sodium dodecylsulfonate were added to a 500 ml three-necked flask to be sufficiently stirred for 15 min for emulsification, 76.34 g of first polymerized monomer ethyl acrylate, 0.76 g of second polymerized monomer acrylic acid, 15.27 g of third polymerized monomer acrylonitrile and 7.63 g of fourth polymerized monomer N-hydroxymethyl acrylamide were added according to a mass ratio of 1:0.01:0.2:0.1, and there were totally 100 g of monomers to be fully stirred for 60 min to obtain a monomer pre-emulsion to be taken out and used later.
(2) 100 ml of deionized water and 0.15 g of sodium dodecylsulfonate were added to a 500 ml four-necked flask with a condenser tube, a stirrer, a peristaltic pump and a thermometer to be heated to 75°C, emulsification was performed at the rotational speed of 2000 r/min for 15 min, such that the system was sufficiently emulsified, the pre-emulsion prepared in the above step and an initiator solution (0.2 g of potassium peroxodisulfate was dissolved in 30 g of deionized water to form a solution) were slowly dripped, the temperature was increased to 90°C after dripping, heat preservation reaction was performed for 1 h, cooling was performed to 40°C or below, pH of the system was adjusted by ammonium hydroxide to be neutral, then, stirring was stopped, and filtering and discharging were performed to obtain a polymer emulsion.

The volume particle size distribution Dv50 of the acrylate copolymer is 0.1µm±0.01 µm (the volume particle size distribution Dv50 of the acrylate copolymer in each example is 0.1µm±0.01 µm).

### Preparation of binder

The acrylate copolymer emulsion prepared above is spray-dried to obtain a binder of a ring-shaped structure. Parameters of spray drying: inlet air temperature 115°C, outlet air temperature 65°C, and air pressure intensity: 2200 Pa.

### Example 2 to Example 27

On the basis of Example 1, the type and mass ratio of input monomers is changed, the monomer composition of the acrylate copolymer, the volume particle size distribution Dv50 of the binder and the areal density of the binder coating the substrate are adjusted to obtain Example 2 to Example 27.

### Comparative Example 1

### Spherical binder obtained by emulsion polymerization

(1) 150 g of deionized water and 3.6 g of sodium dodecylsulfonate were added to a 500 ml three-necked flask to be sufficiently stirred for 15 min for emulsification, 76.34 g of first polymerized monomer ethyl acrylate, 22.9g of second polymerized monomer acrylic acid, 15.27 g of third polymerized monomer acrylonitrile and 7.63 g of fourth polymerized monomer N-hydroxymethyl acrylamide were added according to a mass ratio of 1:0.3:0.2:0.1, and there were totally 100 g of monomers to be fully stirred for 60 min to obtain a monomer pre-emulsion to be taken out and used later.
(2) 100 ml of deionized water and 0.15 g of sodium dodecylsulfonate were added to a 500 ml four-necked flask with a condenser tube, a stirrer, a peristaltic pump and a thermometer to be heated to 75°C, emulsification was performed at the rotational speed of 2000 r/min for 15 min, such that the system was sufficiently emulsified, the pre-emulsion prepared in the above step and an initiator solution (0.2 g of potassium peroxodisulfate was dissolved in 30 g of deionized water to form a solution) were slowly dripped, the temperature was increased to 90°C after dripping, heat preservation reaction was performed for 1 h, cooling was performed to 40°C or below, pH of the system was adjusted by ammonium hydroxide to be neutral, then, stirring was stopped, and filtering and discharging were performed to obtain a first polymer emulsion.
(3) the step (1) was repeated to obtain a second pre-emulsion, the second pre-emulsion and an initiator solution (0.2 g of potassium peroxodisulfate was dissolved in 30 g of deionized water to form a solution) were added to the first polymer emulsion obtained in the step (2), the temperature was increased to 90°C after dripping, heat preservation reaction was performed for 1 h, cooling was performed to 40°C or below, pH of the system was adjusted by ammonium hydroxide to be neutral, then, stirring was stopped, and filtering and discharging were performed to obtain a second polymer emulsion.

### Preparation of Battery Cell and Preparation of Battery

### (1) Preparation of separator

A commercially available PE micropore film with the thickness of 7 µm and the average pore size of 80 nm (from Advanced Electronic Technology Ltd. Company) was used. The separator binder prepared above was evenly stirred in deionized water to obtain a slurry (solid content: 20 %). The slurry was sprayed on both surfaces of a substrate, and a solvent was removed by drying to obtain a bonding layer. The areal density of the bonding layer on the substrate was 1.35 g/m²to obtain a separator.

### (2) Preparation of positive electrode plate

Polyvinylidene fluoride (PVDF), lithium iron phosphate (LFP), conductive agent carbon black, and N-methyl pyrrolidone (NMP) were sufficiently stirred and mixed at a mass ratio of 1.2:58.38:0.42:40 to prepare a positive electrode slurry. A positive electrode current collector aluminum foil was evenly coated with the positive electrode slurry with a loading amount of 200 g/m², and then was dried, cold-pressed and split to obtain a positive electrode plate.

### (3) Preparation of negative electrode plate

Artificial graphite, conductive agent acetylene black, binder styrene butadiene rubber (SBR), and thickener sodium carboxymethylcellulose (CMC-Na) were added to deionized water at a mass ratio of 96.2:1.0:1.6:1.2, and were sufficiently stirred and mixed to prepare a negative electrode slurry (solid content: 63 %). A negative electrode current collector copper foil was coated with the negative electrode slurry with a loading amount of 98 g/m², and then was dried, cold-pressed and split to obtain a negative electrode plate.

### (4) Preparation of electrolyte solution

Ethylene carbonate (EC), ethyl methyl carbonate (EMC) and diethyl carbonate (DEC) were mixed at 25°C according to a volume ratio of 1:1:1 to obtain a mixed solvent, and LiPF₆ was dissolved in the above mixed solvent to obtain an electrolyte solution, where the concentration of LiPF₆ was 1 mol/L.

### (5) Preparation of secondary battery

The positive electrode plate, the separator, and the negative electrode plate were sequentially stacked, wound and cold-pressed (the separator was bonded with the electrode plates in this period) to form a battery cell; and the battery cell was placed in an outer package, the electrolyte solution prepared above was added, and a secondary battery was obtained after procedures such as encapsulation, standing, formation and aging.

### Performance Test

### (1) Cold-press adhesion test procedure

The battery negative electrode plate and the separator were overlapped to be arranged on a hot press, parameters of the hot press were set: the temperature 25°C, the pressure 7t, and the time 15 s, and pressure was applied to obtain a bonded separator/negative electrode plate sample; and the separator/electrode plate sample was cut into a 150 mm×20 mm rectangular sample strip. One side of the electrode plate of the rectangular sample strip was pasted to a steel plate through a double faced adhesive tape, at one end of the rectangular sample strip, the separator and the electrode plate were separated by a length of 2 cm in a length direction, and then a test sample was manufactured.

The steel plate was kept horizontal and was fixed by a lower clamp of a universal testing machine (Xieqiang Instrument Manufacturing (Shanghai) Co., Ltd., model CTM2100), a peeling end portion of the above-mentioned separator was fixed by an upper clamp of the universal testing machine, and a tensile machine was connected. Test conditions were set as a tensile rate of 20 mm/min and a horizontal pull of 10 cm. After tensile force was stable, a tension value was recorded, and the bonding force between the separator and the electrode plate was obtained according to a ratio of the tension value to a sample width.

### (2) Battery Cell hardness test procedure

The battery cell was placed on a platform with two horizontal ends, a width of a fixed middle hollow portion was 12 cm, the battery cell was naturally horizontally placed, and a range of a center position of the battery cell deviating from a horizontal reference line was measured so as to evaluate hardness of the battery cell. The larger the center position of the battery cell deviating from the horizontal reference line indicates that the hardness of the battery cell was poor.

### (3) Large-clamp cycling performance test procedure

Camp force of 10000 N was applied to the exterior of the battery cell, and a cycle test was carried out in this state. The test steps are as follows: at 25°C, the battery prepared in Example 1 was charged to 3.8 V with a constant current of 1/3C, and then charged at a constant voltage of 3.8 V to a current of 0.05C, was put aside for 5 min, then was discharged at 1/3C to 2.0 V, the obtained discharge capacity was recorded as an initial capacity C0, the above steps were repeatedly performed on the same battery, a discharge capacity Cn of the battery after the nth cycle was recorded, and the battery capacity retention rate is Pn=(Cn/C0)×100% after each cycle. That is, the battery capacity retention rate under 500 cycles may be used to reflect the difference in cycling performance.

**Table 1 Binder and bonding layer preparation parameter list**

| Serial Number | First polymerize d monomer | Second polymerized monomer | Third polymerized monomer | Fourth polymerized monomer | Mass ratio | Binder Dv50 particle size (µm) | Bonding layer areal density g/m² | Binder morphology |
|---|---|---|---|---|---|---|---|---|
| Example 1 | Ethyl acrylate | Acrylic acid | Acrylonitrile | N-hydroxymethyl acrylamide | 1:0.0 1:0.2 :0.1 | 7 | 1.35 | Ring shape |
| Example 2 | Ethyl acrylate | Acrylic acid | Acrylonitrile | N-hydroxymethyl acrylamide | 1:0.1 :0.2: 0.1 | 7 | 1.35 | Ring shape |
| Example 3 | Ethyl acrylate | Acrylic acid | Acrylonitrile | N-hydroxymethyl acrylamide | 1:0.3 :0.2: 0.1 | 7 | 1.35 | Ring shape |
| Example 4 | Ethyl acrylate | Acrylic acid | Acrylonitrile | N-hydroxymethyl acrylamide | 1:0.3 :0.2: 0.1 | 7 | 0.70 | Ring shape |
| Example 5 | Ethyl acrylate | Acrylic acid | Acrylonitrile | N-hydroxymethyl acrylamide | 1:0.3 :0.2: 0.1 | 7 | 0.80 | Ring shape |
| Example 6 | Ethyl acrylate | Acrylic acid | Acrylonitrile | N-hydroxymethyl acrylamide | 1:0.3 :0.2: 0.1 | 7 | 2.00 | Ring shape |
| Example 7 | Ethyl acrylate | Acrylic acid | Acrylonitrile | N-hydroxymethyl acrylamide | 1:0.3 :0.2: 0.1 | 7 | 3.00 | Ring shape |
| Example 8 | Ethyl acrylate | Acrylic acid | Acrylonitrile | N-hydroxymethyl acrylamide | 1:0.5 :0.2: 0.1 | 7 | 1.35 | Ring shape |
| Example 9 | Ethyl acrylate | Acrylic acid | Acrylonitrile | N-hydroxymethyl acrylamide | 1:0.8 :0.2: 0.1 | 7 | 1.35 | Ring shape |
| Example 10 | Lauryl acrylate | Acrylic acid | Methacrylonitrile | Acrylamide | 1:0.3 :0.01 :0.1 | 7 | 1.35 | Ring shape |
| Example 11 | Lauryl acrylate | Acrylic acid | Methacrylonitrile | Acrylamide | 1:0.3 :0.15 :0.1 | 7 | 1.35 | Ring shape |
| Example 12 | Lauryl acrylate | Acrylic acid | Methacrylonitrile | Acrylamide | 1:0.3 :0.3: 0.1 | 7 | 1.35 | Ring shape |
| Example 13 | Lauryl acrylate | Acrylic acid | Methacrylonitrile | Acrylamide | 1:0.3 :0.45 :0.1 | 0.5 | 1.35 | Ring shape |
| Example 14 | Lauryl acrylate | Acrylic acid | Methacrylonitrile | Acrylamide | 1:0.3 :0.45 :0.1 | 1 | 1.35 | Ring shape |
| Example 15 | Lauryl acrylate | Acrylic acid | Methacrylonitrile | Acrylamide | 1:0.3 :0.45 :0.1 | 10 | 1.35 | Ring shape |
| Example 16 | Lauryl acrylate | Acrylic acid | Methacrylonitrile | Acrylamide | 1:0.3 :0.45 :0.1 | 15 | 1.35 | Ring shape |
| Example 17 | Lauryl acrylate | Acrylic acid | Methacrylonitrile | Acrylamide | 1:0.3 :0.45 :0.1 | 20 | 1.35 | Ring shape |
| Example 18 | Lauryl acrylate | Acrylic acid | Methacrylonitrile | Acrylamide | 1:0.3 :0.5: 0.1 | 7 | 1.35 | Ring shape |
| Example 19 | Ethyl methacrylat e | Methacrylate | Acrylonitrile | Acrylamide | 1:0.3 :0.2: 0.01 | 7 | 1.35 | Ring shape |
| Example 20 | Ethyl methacrylat e | Methacrylate | Acrylonitrile | Acrylamide | 1:0.3 :0.2: 0.1 | 7 | 1.35 | Ring shape |
| Example 21 | Ethyl methacrylat e | Methacrylate | Acrylonitrile | Acrylamide | 1:0.3 :0.2: 0.17 | 7 | 1.35 | Ring shape |
| Example 22 | Ethyl methacrylat e | Methacrylate | Acrylonitrile | Acrylamide | 1:0.3 :0.2: 0.22 | 7 | 1.35 | Ring shape |
| Example 23 | Ethyl methacrylat e | Methacrylate | Acrylonitrile | Acrylamide | 1:0.3 :0.2: 0.3 | 7 | 1.35 | Ring shape |
| Example 24 | Ethyl acrylate | Acrylic acid | Acrylonitrile | N-hydroxymethyl acrylamide | 1:0:0 .2:0. 1 | 7 | 1.35 | Ring shape |
| Example 25 | Lauryl acrylate | Acrylic acid | Methacrylonitrile | Acrylamide | 1:0.3 :0:0. 1 | 7 | 1.35 | Ring shape |
| Example 26 | Ethyl methacrylat e | Methacrylate | Acrylonitrile | Acrylamide | 1:0.3 :0.2: 0 | 7 | 1.35 | Ring shape |
| Example 27 | Ethyl methacrylat e | Methacrylate | Acrylonitrile | Acrylamide | 1:0.3 :0:0 | 7 | 1.35 | Ring shape |
| Comparative Example 1 | Ethyl acrylate | Acrylic acid | Acrylonitrile | N-hydroxymethyl acrylamide | 1:0.3 :0.2: 0.1 | 7 | 0.70 | Spherical shape |

**Table 2 Battery performance table**

| Serial Number | Cold-press bonding force (N/m) | Battery cellcenter deviation range(mm) | Large-clamp cycling performance (%) |
|---|---|---|---|
| Example 1 | 13.52 | 0 | 94.6 |
| Example 2 | 15.27 | 0 | 95.6 |
| Example 3 | 17.72 | 0 | 97.6 |
| Example 4 | 5.31 | 4 | 91.6 |
| Example 5 | 8.46 | 0 | 92.3 |
| Example 6 | 16.36 | 0 | 96.7 |
| Example 7 | 15.75 | 0 | 96.3 |
| Example 8 | 16.46 | 0 | 96.9 |
| Example 9 | 15.69 | 0 | 96.2 |
| Example 10 | 13.63 | 0 | 94.9 |
| Example 11 | 14.35 | 0 | 95.4 |
| Example 12 | 15.59 | 0 | 95.9 |
| Example 13 | 6.56 | 2 | 91.8 |
| Example 14 | 12.90 | 0 | 94.5 |
| Example 15 | 13.88 | 0 | 95.2 |
| Example 16 | 9.43 | 0 | 93.5 |
| Example 17 | 3.58 | 5 | 91.2 |
| Example 18 | 12.21 | 0 | 94.1 |
| Example 19 | 15.12 | 0 | 95.4 |
| Example 20 | 16.26 | 0 | 96.6 |
| Example 21 | 16.67 | 0 | 97.2 |
| Example 22 | 13.83 | 0 | 94.9 |
| Example 23 | 12.16 | 0 | 93.7 |
| Example 24 | 1.67 | 15 | 87.4 |
| Example 25 | 2.34 | 8 | 89.3 |
| Example 26 | 2.17 | 11 | 88.6 |
| Example 27 | 1.05 | 17 | 86.9 |
| Comparative Example 1 | 0.75 | 24 | 82.6 |

**Table 3 Binder parameter list**

| Serial Number | Binder Dv50 particle size (µm) | Binder specific surface area m²/g | Surface area to volume ratio m⁻¹ of binder | Binder bulk density g/cm³ |
|---|---|---|---|---|
| Example 13 | 0.5 | 1.187 | 18.322×10⁶ | 0.762 |
| Example 14 | 1 | 0.972 | 15.276×10⁶ | 0.656 |
| Example 15 | 10 | 0.687 | 1.622×10⁶ | 0.523 |
| Example 16 | 15 | 0.572 | 1.069×10⁶ | 0.475 |
| Example 17 | 20 | 0.425 | 0.769×10⁶ | 0.453 |
| Example 20 | 7 | 0.745 | 2.285×10⁶ | 0.573 |
| Comparative Example 1 | 7 | 0.337 | 0.856×10⁶ | 0.802 |

From the above data, it can be seen that the binder based on the ring-shaped structure has a larger contact area with the separator and the electrode plates, and good bonding performance can be achieved when the usage amount the binder with the ring-shaped structure is reduced.

The above examples are merely preferred examples of the present application and are not intended to limit the scope of the patent of the present application. Based on the innovative ideas of the present application, equivalent structure transformations made utilizing the content of the specification and drawings of the present application, or the direct or indirect application in other related technical fields all fall within the scope of protection of the patent of the present application.

## Claims

1. A binder for secondary batteries, wherein the binder comprises an acrylate copolymer, and is in a ring shape.

2. The binder for secondary batteries according to claim 1, wherein the specific surface area of the binder ranges from 0.4 m²/g to 1.2 m²/g, and preferably, the specific surface area of the binder ranges from 0.6 m²/g to 0.9 m²/g.

3. The binder for secondary batteries according to claim 1 or 2, wherein a surface area to volume ratio of the binder is 0.1×10⁶m⁻¹ to 20×10⁶m⁻¹, and preferably, the surface area to volume ratio of the binder is 0.5×10⁶m⁻¹ to 16×10⁶m⁻¹.

4. The binder for secondary batteries according to any one of claims 1 to 3, wherein the bulk density of the binder ranges from 0.3 g/cm³ to 0.8 g/cm³, and preferably, the bulk density of the binder ranges from 0.4 g/cm³ to 0.7 g/cm³.

5. The binder for secondary batteries according to any one of claims 1 to 4, wherein the binder is in a circular ring shape.

6. The binder for secondary batteries according to any one of claims 1 to 5, wherein the volume particle size distribution Dv50 of the binder ranges from 1 µm to 15 µm, and preferably, the volume particle size distribution Dv50 of the binder ranges from 3 µm to 12 µm.

7. The binder for secondary batteries according to any one of claims 1 to 6, wherein constituent monomers of the acrylate copolymer comprise a first polymerized monomer, and the structure of the first polymerized monomer comprises: 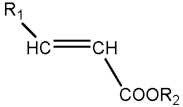 wherein R1 comprises hydrogen or an alkyl group with 1-12 carbon atoms, and R2 comprises an alkyl group with 1-12 carbon atoms.

8. The binder for secondary batteries according to claim 7, wherein the first polymerized monomer comprises one or more of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate and -2-hydroxypropyl methacrylate.

9. The binder for secondary batteries according to any one of claims 1 to 8, wherein constituent monomers of the acrylate copolymer comprise a second polymerized monomer, and the structure of the second polymerized monomer comprises: 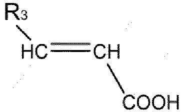 wherein R3 comprises hydrogen or an alkyl group with 1-6 carbon atoms.

10. The binder for secondary batteries according to claim 9, wherein the second polymerized monomer comprises one or more of acrylic acid, methacrylic acid, butenoic acid and heptenoic acid.

11. The binder for secondary batteries according to any one of claims 1 to 10, wherein constituent monomers of the acrylate copolymer comprise a third polymerized monomer, and the structure of the third polymerized monomer comprises: 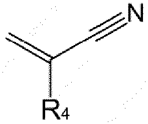 wherein R4 comprises hydrogen atoms or an alkyl group with 1-6 carbon atoms.

12. The binder for secondary batteries according to claim 11, wherein the third polymerized monomer comprises one or more of acrylonitrile and methacrylonitrile.

13. The binder for secondary batteries according to any one of claims 1 to 12, wherein constituent monomers of the acrylate copolymer comprise a fourth polymerized monomer, and the structure of the fourth polymerized monomer comprises: 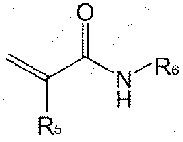 wherein R5 comprises hydrogen atoms or an alkyl group with 1-6 carbon atoms, and R6 comprises hydrogen atoms, a hydroxy-substituted alkyl group with 1-6 carbon atoms, or an alkoxy group with 1-6 carbon atoms.

14. The binder for secondary batteries according to claim 13, wherein the fourth polymerized monomer comprises one or more of acrylamide, N-hydroxymethyl acrylamide and N-butoxymethyl acrylamide.

15. The binder for secondary batteries according to any one of claims 1 to 14, wherein constituent monomers of the acrylate copolymer comprise a first polymerized monomer, a second polymerized monomer, a third polymerized monomer and a fourth polymerized monomer, a mass ratio of the first polymerized monomer, the second polymerized monomer, the third polymerized monomer and the fourth polymerized monomer is 1:(0.01-0.8):(0.01-0.5):(0.01-0.3), and preferably, the mass ratio of the first polymerized monomer, the second polymerized monomer, the third polymerized monomer and the fourth polymerized monomer is 1:(0.1-0.5):(0.15-0.45):(0.1-0.22).

16. A separator, wherein the separator comprises a substrate and a bonding layer arranged on at least one side of the substrate, and the bonding layer comprises the binder for secondary batteries according to any one of claims 1 to 15.

17. The separator according to claim 16, wherein the areal density of the bonding layer on the substrate ranges from 0.7 g/m² to 3 g/m², and preferably, the areal density of the bonding layer on the substrate ranges from 0.8 g/m² to 2 g/m².

18. A secondary battery, comprising the separator according to claim 16 or 17.

19. An electrical apparatus, comprising the secondary battery according to claim 18.
